# EUROPEAN PATENT SPECIFICATION

(11) **EP 4 571 275 B1**
(45) Date of publication and mention of the grant of the patent: **01.07.2026**
(21) Application number: 23461691.0
(22) Date of filing: 15.12.2023
(51) Int. Cl.: G01F 23/68, G01F 23/76, G01F 23/70, G01F 23/36, G01F 23/64, G01F 23/00, G01F 23/263

(54) **LEVEL SENSOR**
FÜLLSTANDSSENSOR
CAPTEUR DE NIVEAU

(43) Date of publication of application: 18.06.2025
(73) Proprietor: B/E Aerospace Inc., Winston Salem, NC 27105 (US)
(72) Inventor: KROCZEK, Piotr Jacek, 51-317 Wroclaw (PL); HOMA, Dariusz Sebastian, 51-317 Wroclaw (PL); HOMA, Monika Magdalena, 51-317 Wroclaw (PL)
(74) Representative: Dehns

(56) References cited:
- WO-A1-2022/236401
- CN-U- 202 329 754
- CN-U- 208 622 652
- CN-U- 215 811 119
- CN-Y- 2 223 486
- DE-U1- 29 807 067
- GB-A- 2 103 798
- JP-A- S5 555 220
- US-A- 2 736 336
- US-A- 3 393 283

## Description

### TECHNICAL FIELD

This disclosure relates to level sensors, particularly for sensing the level of content in a container such as, but not exclusively, for detecting a level of waste in a waste tank e.g. a waste tank in an aircraft sanitation system.

### BACKGROUND

Various technologies are known for sensing or detecting a level of content in a container e.g. to be able to detect when the content is at or approaching a threshold level in the container (e.g. too full or too empty, depending on the application or use). For example, electrical or mechanical sensors are known that can provide an indication of a level of fullness of the content in the container.

One example where such level sensors are known is in a reservoir or tank containing fluid, where it is necessary to know when the reservoir or tank is close to or at a predetermined maximum fullness, so that it can, for example, be emptied or flow to the tank can be regulated e.g. to prevent overflow. Level sensors are used, for example, to detect the level of waste in a waste collection tank e.g. in a sanitary system. Such waste tanks are used, for example, on aircraft, where the sanitary waste is collected in the tank and the tank is emptied at appropriate times. There are reasons for needing to know if the tank is becoming too full so that it can be emptied or the flow of waste into the tank can be regulated to avoid overflow.

Problems can arise if the content to be detected includes different types of matter or states, if the sensors used to detect the level are not suitable for detecting, or cannot accurately detect different types of matter. For example, in a waste tank, the tank content may comprise waste fluid or liquid but may also include more solid or foam type matter e.g. a layer of foam-type matter or scum on top of the liquid. Some types of sensor commonly used e.g. ultrasound sensors, might only detect the level of the liquid but not detect the foam or other matter on top of the liquid. This can, therefore, result in a false, low level detection when, in actual fact, the tank may be almost full.

Level sensors are disclosed in DE 298 07 067 U1, JP S55 55220 A, CN 2 223 486 Y, WO 2022/236401 A1, CN 208 622 652 U, US 3 393 283 A and GB 2 103 798 A. There is, therefore, a need for an improved level sensor that is capable of accurately sensing the level of such content even when it is made up of different types of matter.

### SUMMARY

As defined by claim 1, the invention comprises a level sensor for detecting a level of content in a tank, the level sensor comprising a flexible cable at an end of which is attached a float sensor, the float sensor configured to be suspended from the cable in the tank, in use, and to change its orientation as it contacts content in the tank, and wherein the float sensor is activated to generate a level sense indication according to its orientation.

The float sensor includes an internal cavity containing a capacitive sensing device and partially filled with a conductive fluid, such that in a first, suspended, orientation of the float sensor, the fluid covers the sensing device and in a second, float orientation of the float sensor, the fluid in the cavity does not cover the sensing device.

In one example, a conductor extends along the cable to the float sensor for supplying electrical power to the float sensor.

The conductive fluid may be water.

In one example, the float sensor is formed with a rounded lower part to stabilise the float sensor when in contact with content in the tank. The lower part may have a rounded bottom surface and a flat top surface, and may also have an upper part mounted to the flat top surface of the lower part. The lower part may be made of plastic and/or the upper part may be made of polyurethane foam.

The level sensor may further comprise a height adjustment assembly through which the cable extends, the height adjustment assembly comprising a housing to which the cable is fixed and which can be moved by a user in an axial direction to vary the height of the float sensor in the container, in use.

In one example, the housing of the height adjustment is an inner housing and an outer housing within which the inner housing is mounted for axial movement relative thereto may be configured to be fixed to the container in use.

The level sensor may further comprise a locking mechanism between the inner housing and the outer housing to lock movement of the inner housing relative to the outer housing at one or more predetermined axial positions. The locking mechanism may comprise spring-loaded locking pins extending from one of the inner housing or the outer housing and recesses or holes in the other of the outer housing and the inner housing to locking receive the pins at the one or more predetermined axial positions.

A container for receiving and storing content, the container including one or more level sensors as described above, extending into the container to detect a level of the content, is also provided.

The container may be e.g. a tank for collection of waste

### BRIEF DESCRIPTION

Examples of the level sensor according to this disclosure will now be described with reference to the drawings. It should be noted that these are examples only and that variations are possible within the scope of the claims.
Figure 1 shows an example of a typical waste tank for the purposes of explanation.
Figure 2 shows a see-through view of a typical waste tank such as shown in Fig. 1, for the purposes of explanation.
Figure 3 shows an example of a tank provided with a level sensor according to the disclosure.
Figure 4 shows an example of the level sensor according to the disclosure when not activated.
Figure 5 shows the tank of Fig. 4 partially full.
Figure 6 shows the level sensor of Fig. 4 in an orientation when the content it is measuring is at a level to trigger or activate the sensor.
Figures 7A, 7B and 7C show different orientations of the level sensor according to the level of the content it is measuring.
Figure 8 is a sectional view of a level sensor according to the disclosure.
Figure 9 is an isometric view of a level sensor according to the disclosure.
Figure 10A shows an example of a tank with a level sensor at a first height.
Figure 10B shows a height adjustment assembly positioning the sensor such as shown in Figure 10A.
Figure 10C shows an example of a tank with a level sensor at a second height.
Figure 10D shows a height adjustment assembly positioning the sensor such as shown in Figure C.
Figure 11 shows a detail of a height adjustment assembly such as shown in Figs. 10B and 10D.

### DETAILED DESCRIPTION

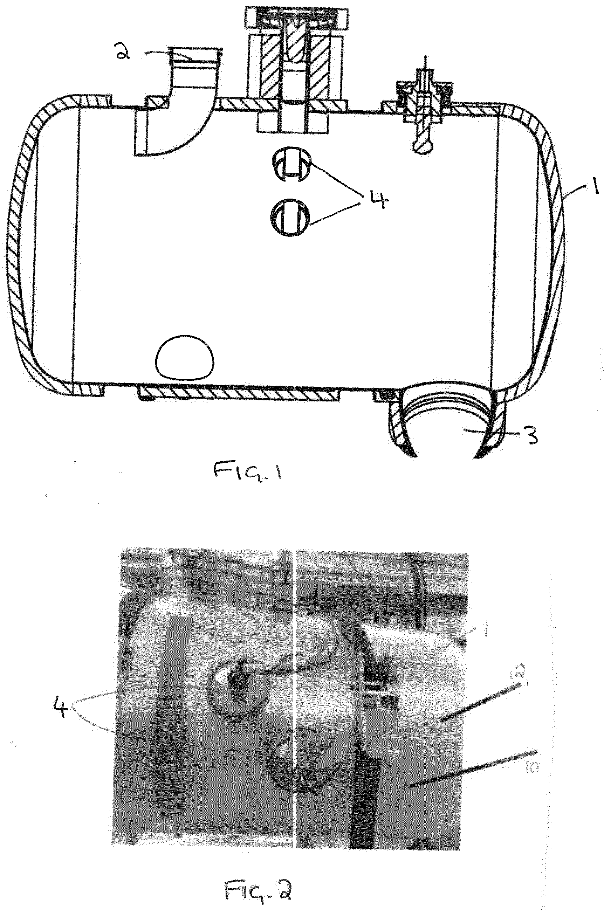

Referring first to Figs. 1 and 2, for background explanation, a waste tank 1 typically has a waste inlet 2 and a drain 3 and one or more level sensors 4. In this example, there are two level sensors. The use of two level sensors to detect a first level threshold and a second level threshold (e.g. 30% full and 70% full) is common in e.g. waste tanks.

Fig. 2 shows an example of a tank containing waste (also known as grey water in sanitation systems). Commonly, such waste will comprise waste liquid 10, but may also typically have a layer of foam or scum type waste matter or contaminant 12 on top of the waste liquid. Depending on the types of sensor 4 used, the layer of foam matter 12 might not be detected, or at least not reliably or accurately detected.

As shown in the examples of Figs. 1 and 2, the level sensors 4 may be ultrasonic sensors mounted to the outside of the tank, which emit ultrasonic waves through the waste and detect reflected waves to detect the content level. Whilst such sensors work well with liquid waste (grey water), heavy foam or scum can absorb the waves, causing false or no readings. In the example of Fig. 2, the lower sensor would indicate that the content had exceeded its (e.g. 30% level), but, although the total level of content in the tank also exceeds the level of the upper (e.g. 70%) sensor, this may fail to generate a detection signal due to the waste at that level being foam matter.

Also, with such known sensors, attached to the tank, the position or height of the sensors is fixed. If the level thresholds are to be changed, the sensors need to be dismounted and reattached or new sensors need to be attached.

Whilst the problems have been described with reference to waste tanks and with ultrasound sensors, similar problems may arise when sensing any content of any type of container and using any known type of sensor.

To address these issues, this disclosure provides a new type of sensor that is configured to be suspended inside the container (hereinafter, we will refer to the container as a tank 100, but this does not imply any limitation on the type of container), from an upper region of the tank wall, the sensor 400a, 400b including a flexible cable 102 at an end of which is attached a float sensor 104. The float sensor is configured to change its orientation as it contacts content e.g. waste in the tank, and wherein the float sensor is activated to generate a sense indication according to its orientation.

The cable may be suspended from the top of the tank by direct attachment to the tank top wall 101 or, as described further below, may be attached by a connector which may incorporate a height adjustment assembly 500.

In the example shown, the tank 100 is similar to the tank shown in Figs. 1 and 2, but the level sensor can be used in other tanks or containers. The tank, shown here, may have an inlet 200 and a drain 300.

In the example shown, two of the level sensors (to be described further below) are suspended inside the tank. A first level sensor 400b is suspended in the tank such that the float sensor 104 is at a first height from the bottom 103 of the tank. This may be to detect the lower level threshold (e.g. the 30% level as described above). A second level sensor 400b extends into the tank to terminate at a second height from the tank bottom 103 (e.g. to serve as the 70% level sensor). It is, however, conceivable that the tank may use only one sensor or may have more than two sensors at different heights.

The configuration of the float sensors 104 will be described in more detail below, but, in summary, they are configured to be lifted due to buoyancy as they come into contact with the tank content and are shaped such that they tilt to a different orientation as they contact the content. The sensor is triggered to provide a sense output or indication at a predetermined tilt orientation. The weight of the float sensor and the cable are such that the orientation will not be affected by air forces or the like, but only by contact with the content of the tank.

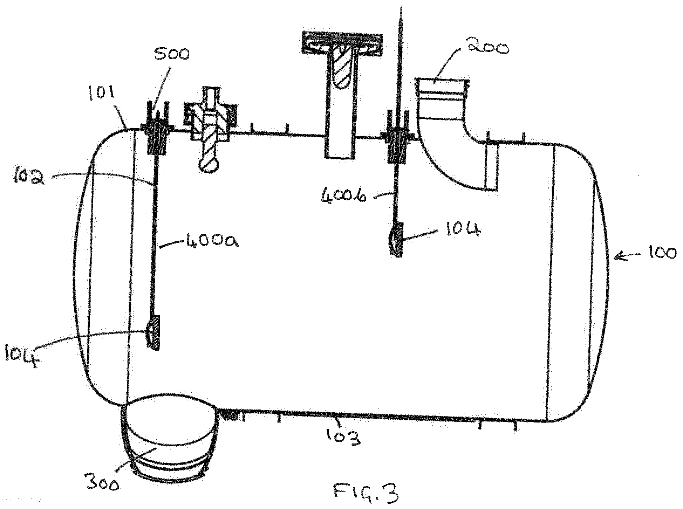

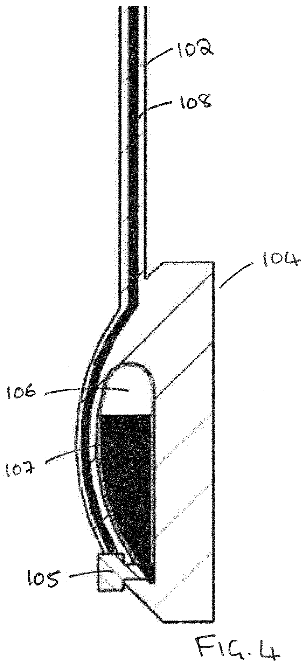

When the tank is empty or the level of content in the tank is below the lowest level to be detected (e.g. as seen in Fig. 3), the sensor 400 will hang freely, straight down, inside the tank from where it is suspended, and the float sensor 104 is shaped such that it is suspended at the end of the cable 102 in a first orientation (a suspended or substantially vertical orientation) (Fig. 4). This orientation will be described further below, but is such that a sensing device 105 in the float sensor 104 is not triggered and so does not output any sense signal or indication. The reason the sensing device 105 is not triggered in this orientation of the float sensor 104 is that the float sensor 104 has an internal cavity 106 that is partially filled with water 107 or other conductive fluid and, when the float sensor is hanging in the first orientation, the water/fluid surrounds the sensing device 105, which is a capacitive sensor. So long as the sensor device is immersed in the water/fluid 107, it is not triggered.

Fig. 4 also shows a conductor 108 extending along the cable 102 to the sensing device 105 to provide electric power from an external supply to the sensing device 105. It is feasible that the sensing device could be self-powered or powered in some other way.

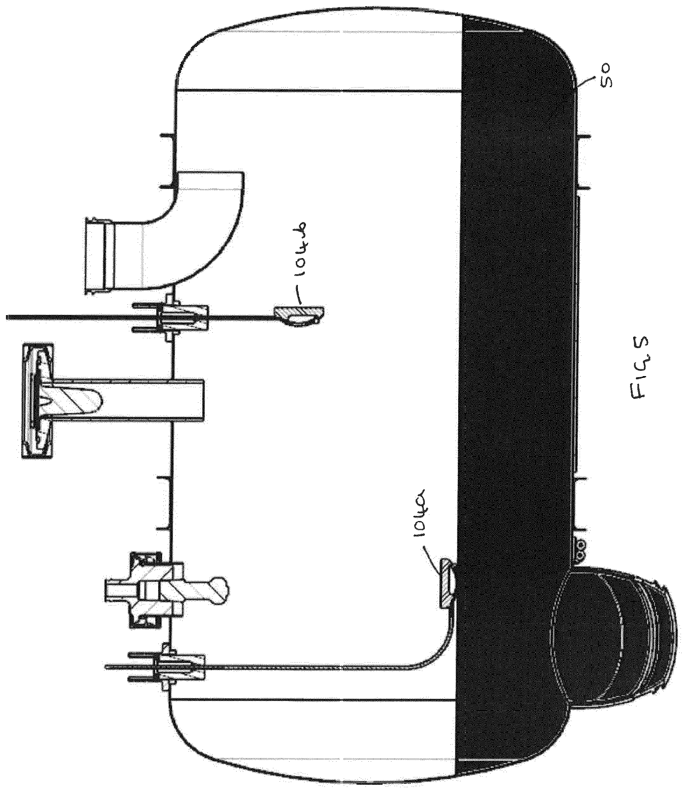

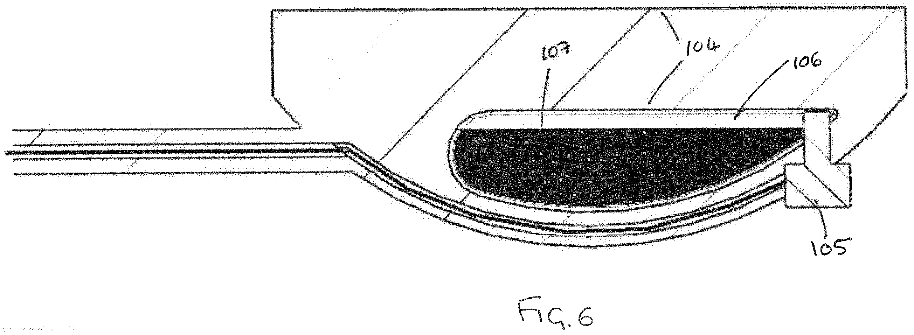

Figures 5 and 6 show what happens when the level of content (e.g. waste 50) in the tank reaches the first level to be detected by the sensor.

In the example of Fig. 5, the level of waste in the tank has reached the height of the float sensor 104 suspended above the bottom 103 of the tank and the float sensor is lifted due to the buoyancy force on the waste causing the float sensor 104 to float on top of the waste. Due to the shape of the float sensor 104, described further below, the orientation of the float sensor changes as it is lifted by the waste to the orientation shown in Figs. 5 and 6 (a 'float' orientation or substantially horizontal orientation when compared to the first orientation). The float sensor 104 is caused to float, and lie in the second orientation regardless of the type of content i.e. whether, in the example above, the waste is liquid or foam type waste on the surface of the liquid waste. The float sensor will float on the uppermost surface of all of the waste/other content of the tank and will, therefore, provide a true and accurate indication of the actual content level.

The float sensor 104 is configured such that when it is in its second orientation, the sensing device 105 is triggered to output a level sense indication or signal, providing an indication that the content has reached the sensor threshold level.

The way this orientation of the float sensor causes the sensor device 105 to trigger can be described with reference to Fig. 6. Here, it can be seen that the water/fluid 107 in the float sensor cavity 106 levels out in the cavity such that it no longer covers the sensing device (or at least the actuable part 105a of the sensing device 105. The sensing device is configured such that when it is no longer submersed in the water/fluid, the device is triggered to provide a level sense output. that the capacitive sensor being in the dry condition will cause the stored voltage to generate an output signal.

In an example with two level sensors 104a, 104b at different positions e.g. 30% full and 70% full, the first sensor would trigger at the first level, as described above with reference to Figs. 5 and 6. The second sensor 104b would be suspended at a second, higher, position and would tilt to the floating second orientation when the level of waste reaches that position in the tank.

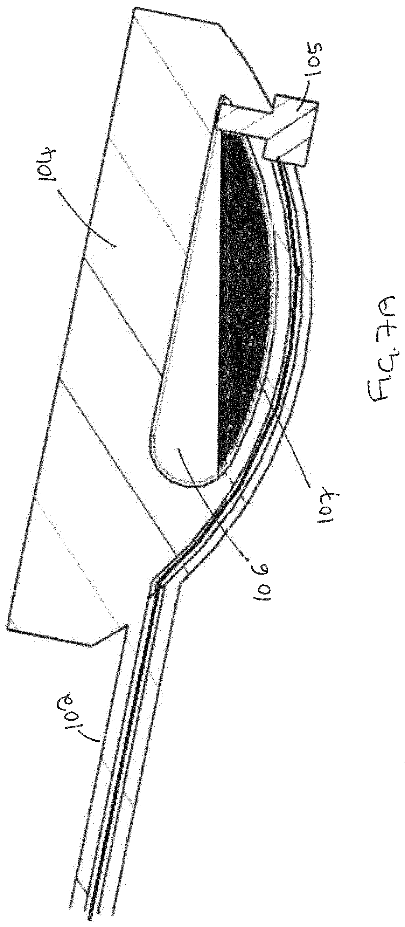

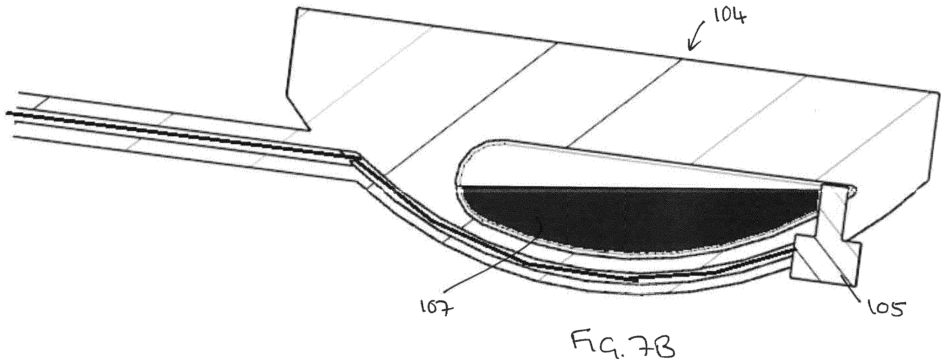

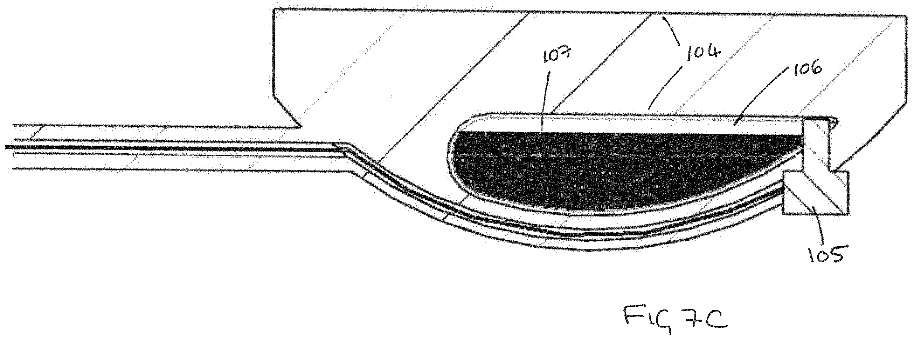

Figs 7A to 7C show the change in orientation of the float sensor 104 as it begins to be lifted by the waste 50. Fig. 7A shows the float sensor orientation when its end (when in the first, vertical, orientation) makes initial contact with the waste 50. Where, even though the float sensor is tilted from vertical, the water or fluid in the float sensor cavity still covers the sensing device 105 (or its actuable part 105a). As the tank continues to fill, the float sensor is lifted more and the water/fluid in the cavity starts to move across the cavity and away from the sensing device (Fig. 7B). Finally, when the predetermined level (here, by way of example, 30% fullness) is attained by the waste 50, the float sensor is fully lifted to its second orientation (Fig. 7C) such that the water is now settled in the cavity at a level that no longer covers the sensing device or its actuable part. The amount of water in the cavity, and the size of the cavity, will need to be selected such that the water level in the cavity when in the second orientation does not cover the sensing device.

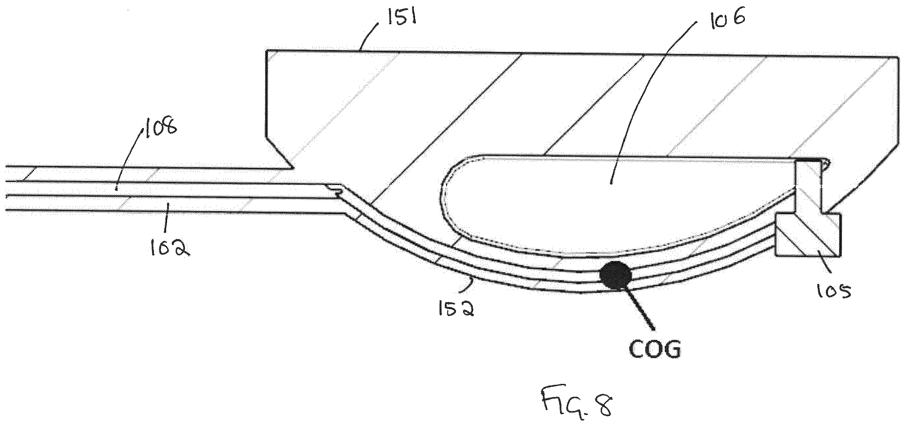

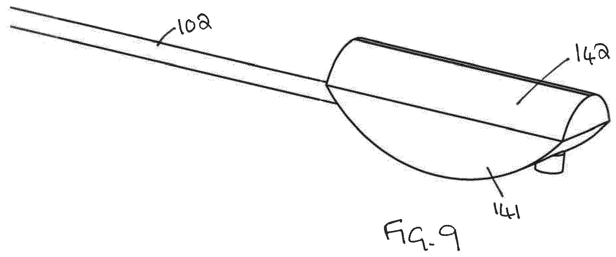

To ensure that the float sensor 104 is lifted to its second (horizontal) orientation by contact with the waste, rather than flipping to a different orientation, the float sensor needs to have a suitably buoyant shape. The shape may be as shown in Figs. 8 and 9, to stabilise the position of the float sensor on the content/waste 50. In this example, the float sensor has an essentially semi-cylindrical lower part 141, having a relatively flat or planar top surface 151 and a rounded or convex bottom surface 152. The cavity 107 is provided in the lower part defined by the bottom surface 152 and is shaped such that the centre of gravity COG causes the float sensor 104 to stabilise of the surface of the waste, whilst ensuring that the sensing device 105 remains free from the waste. This shape (similar to the shape of a boat hull) is particularly stable and so especially useful in high vibrational environments e.g. on aircraft. The float sensor may also have an upper part 142 mounted to the flat side of the lower part, which is the float part of the float sensor tat will remain above the surface of the waste. The lower part may be made of e.g. plastic and the upper part may be made of e.g. polyurethane foam, but other materials are also conceivable.

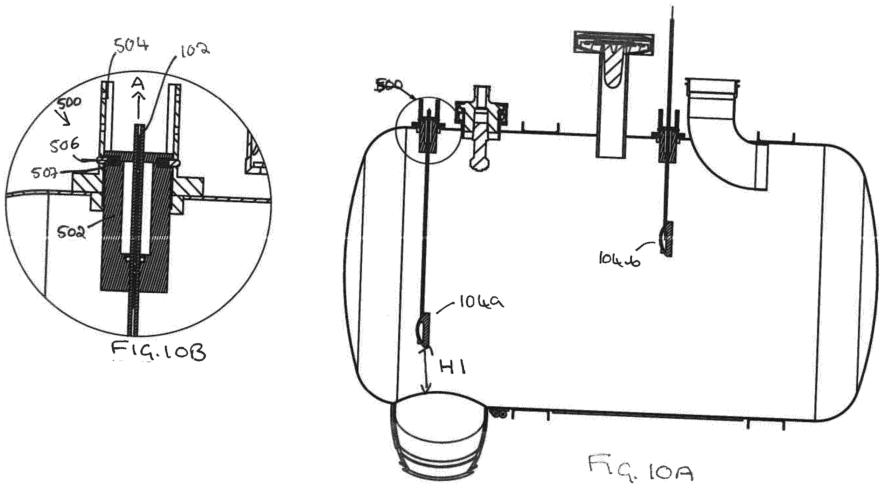

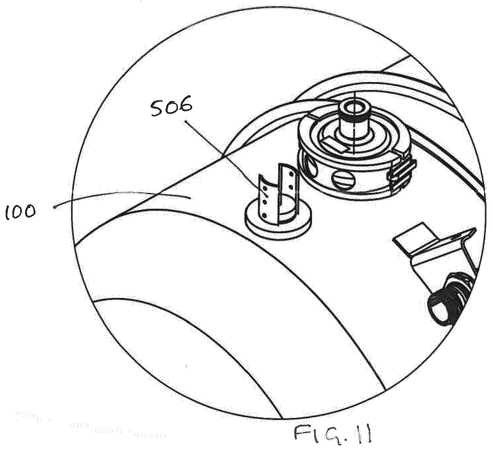

As mentioned above, another disadvantage of known sensors is that they have a fixed position relative to the tank. In some examples, the level sensors of this disclosure may be height adjustable, so that the distance of the float sensor from the bottom of the tank (and, therefore the level of content in the tank that triggers them) can be easily varied. This feature can be explained with reference to Figs. 10A - 10D and 11.

In this example, the cable 102 of the level sensor is mounted to the tank via a height adjustment assembly 500 that forms a connector between the cable 102 and the tank and from which the level sensor hangs. The height adjustment assembly 500 comprises an inner housing 502 which accommodates the cable 102 therethrough and to which the cable is fixed. The inner housing 502 is mounted within, and axially movable relative to an outer housing 504 (the axis A corresponding to the axis along the length of the cable 102 and the axis defined by the hanging cable). The cable 102 is fixed in the inner housing 502 with one end (to which the float sensor 104 is attached) extending from the assembly into the tank, and the opposite end extending outwards from the inner housing and the tank. The outer housing 504 is fixed relative to the tank e.g. by being mounted or fastened to the top wall or an upper part of the tank. To adjust the height of the float sensor 104 from the bottom of the tank. The sensor is moved upwards by pulling the external end of the cable upwards, away from the tank, which consequently causes upwards movement of the float sensor 104 relative to the tank, and also upwards movement of the inner housing 502 that is fixed to the cable, relative to the outer housing 504 and to the tank.

A locking mechanism may be provided between the inner housing and the outer housing to secure the inner housing, and, therefore, the float sensor 104, in a desired position. In the example shown, the locking mechanism comprises spring-loaded pins 506 mounted to the inner housing and corresponding recesses or holes 508 in the wall of the outer housing. As the inner housing moves upwards relative to the outer housing, the pins 506 are spring loaded inwards to permit free axial movement of the inner housing relative to the outer housing. At a desired position, the pins 506 extend due to the spring 507 force to lock in the corresponding recesses or holes 508 in the outer housing. The holes/recesses 508 may be provided at selected spaced intervals along the outer housing e.g. corresponding to selected heights for selected levels e.g. 30%, 30%, 40%. Any suitable number of holes can be provided for different selected positions and the location and spacing of the holes can be selected according to the use. In the example shown, the height adjustment assembly is mounted so that the inner and outer housings are external of the tank, for access by the user. The pins can be released from a locked state by manual pushing by the user in an inwards direction against the force of the spring as seen in Fig. 11.

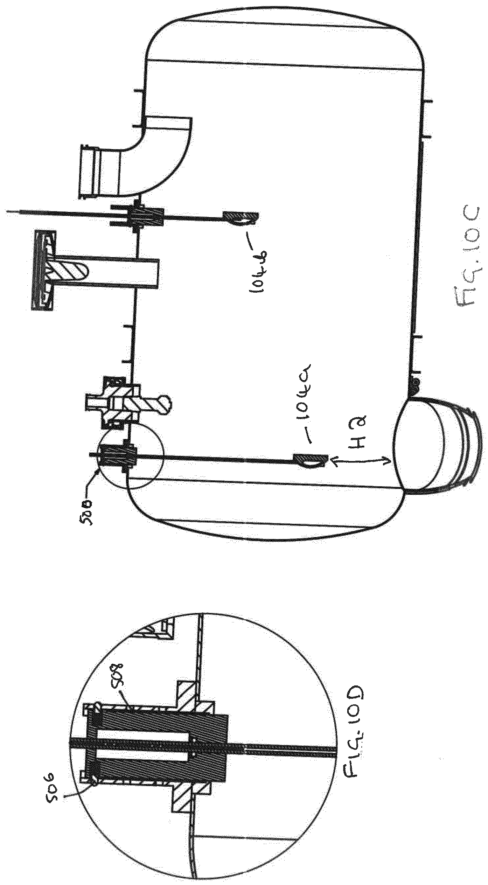

Figure 10A shows the float sensor at a first height H1 from the bottom of the tank, and Fig. 10B shows the configuration of the height adjustment assembly to achieve that height. Fig. 10C shows the float sensor at a second height, H2, relative to the bottom of the tank, H2 being further from the bottom of the tank tan H1. Fig. 10D shows the height adjustment assembly to achieve that height.

The level sensor according to the disclosure can be easily assembled to existing tanks or containers and are responsive to different types of content, thus ensuring accurate and reliable level sensing. Furthermore, in some examples, the height of the sensor can be easily adjusted from outside the container by a user.

## Claims

1. A level sensor for detecting a level of content in a tank, the level sensor (400a, 400b) comprising a flexible cable (102) at an end of which is attached a float sensor (104), the float sensor configured to be suspended from the cable in the tank, in use, and to change its orientation as it contacts content in the tank, and wherein the float sensor is activated to generate a level sense indication according to its orientation; wherein the float sensor includes an internal cavity (106) containing a sensing device (105) and partially filled with a conductive fluid (107), such that in a first, suspended, orientation of the float sensor, the fluid covers the sensing device and in a second, float orientation of the float sensor, the fluid in the cavity does not cover the sensing device, **characterised in that** the sensing device is a capacitive sensing device (105).

2. The level sensor of claim 1, comprising a conductor (108) extending along the cable (102) to the float sensor (104) for supplying electrical power to the float sensor.

3. The level sensor of any preceding claim, wherein the conductive fluid is water.

4. The level sensor of any preceding claim, wherein the float sensor (104) is formed with a rounded lower part (141) to stabilise the float sensor when in contact with content in the tank.

5. The level sensor of claim 4, the lower part (141) having a rounded bottom surface (152) and a flat top surface (151).

6. The level sensor of claim 5, having an upper part (142) mounted to the flat top surface of the lower part.

7. The level sensor of claim 6, wherein the lower part (141) is made of plastic and/or wherein the upper part (142) is made of polyurethane foam.

8. The level sensor of any preceding claim, further comprising a height adjustment assembly (500) through which the cable (102) extends, the height adjustment assembly comprising a housing (502) to which the cable is fixed and which can be moved by a user in an axial direction to vary the height of the float sensor in the container, in use.

9. The level sensor of claim 8, wherein the housing of the height adjustment is an inner housing (502) and further comprising an outer housing (504) within which the inner housing is mounted for axial movement relative thereto, the outer housing configured to be fixed to the container in use.

10. The level sensor of claim 9, further comprising a locking mechanism between the inner housing and the outer housing to lock movement of the inner housing relative to the outer housing at one or more predetermined axial positions.

11. The level sensor of claim 10, wherein the locking mechanism comprises spring-loaded locking pins extending from one of the inner housing or the outer housing and recesses or holes in the other of the outer housing and the inner housing to locking receive the pins at the one or more predetermined axial positions.

12. A container for receiving and storing content, the container including one or more level sensors as claimed in any preceding claim, extending into the container to detect a level of the content.

13. The container of claim 12, being a tank for collection of waste.

## Patentansprüche

1. Füllstandssensor zum Erfassen eines Füllstands eines Inhalts in einem Tank, wobei der Füllstandssensor (400a, 400b) ein flexibles Kabel (102) aufweist, an dessen einem Ende ein Schwimmersensor (104) befestigt ist, wobei der Schwimmersensor konfiguriert ist, um beim Gebrauch von dem Kabel in dem Tank herabzuhängen und um seine Ausrichtung zu ändern, wenn er den Inhalt in dem Tank kontaktiert, und wobei der Schwimmersensor aktiviert wird, um eine Füllstandserfassungsanzeige gemäß seiner Ausrichtung zu erzeugen; wobei der Schwimmersensor einen inneren Hohlraum (106) beinhaltet, der eine Erfassungsvorrichtung (105) enthält und teilweise mit einem leitfähigen Fluid (107) gefüllt ist, sodass in einer ersten, hängenden Ausrichtung des Schwimmersensors das Fluid die Erfassungsvorrichtung bedeckt und in einer zweiten, schwimmenden Ausrichtung des Schwimmersensors das Fluid in dem Hohlraum die Erfassungsvorrichtung nicht bedeckt, **dadurch gekennzeichnet, dass** die Erfassungsvorrichtung eine kapazitive Erfassungsvorrichtung (105) ist.

2. Füllstandssensor nach Anspruch 1, der einen Leiter (108) aufweist, der sich entlang des Kabels (102) zu dem Schwimmersensor (104) erstreckt, um dem Schwimmersensor elektrische Energie zuzuführen.

3. Füllstandssensor nach einem der vorhergehenden Ansprüche, wobei das leitfähige Fluid Wasser ist.

4. Füllstandssensor nach einem der vorhergehenden Ansprüche, wobei der Schwimmersensor (104) mit einem abgerundeten unteren Teil (141) ausgebildet ist, um den Schwimmersensor zu stabilisieren, wenn er mit dem Inhalt in dem Tank in Kontakt steht.

5. Füllstandssensor nach Anspruch 4, wobei der untere Teil (141) eine abgerundete Bodenfläche (152) und eine flache Oberseite (151) aufweist.

6. Füllstandssensor nach Anspruch 5, der einen oberen Teil (142) aufweist, der an der flachen Oberseite des unteren Teils montiert ist.

7. Füllstandssensor nach Anspruch 6, wobei der untere Teil (141) aus Kunststoff hergestellt ist und/oder wobei der obere Teil (142) aus Polyurethanschaum hergestellt ist.

8. Füllstandssensor nach einem der vorhergehenden Ansprüche, ferner aufweisend eine Höhenverstellungsanordnung (500), durch die sich das Kabel (102) erstreckt, wobei die Höhenverstellungsanordnung ein Gehäuse (502) aufweist, an dem das Kabel fixiert ist und das von einem Benutzer in einer axialen Richtung bewegt werden kann, um die Höhe des Schwimmersensors in dem Behälter beim Gebrauch zu variieren.

9. Füllstandssensor nach Anspruch 8, wobei das Gehäuse der Höhenverstellung ein inneres Gehäuse (502) ist und ferner ein äußeres Gehäuse (504) aufweist, in dem das innere Gehäuse zur axialen Bewegung relativ dazu montiert ist, wobei das äußere Gehäuse konfiguriert ist, um beim Gebrauch an dem Behälter fixiert zu sein.

10. Füllstandssensor nach Anspruch 9, ferner aufweisend einen Verriegelungsmechanismus zwischen dem inneren Gehäuse und dem äußeren Gehäuse, um eine Bewegung des inneren Gehäuses relativ zu dem äußeren Gehäuse an einer oder mehreren vorbestimmten axialen Positionen zu verriegeln.

11. Füllstandssensor nach Anspruch 10, wobei der Verriegelungsmechanismus federbelastete Verriegelungsstifte, die sich von einem von dem inneren Gehäuse oder dem äußeren Gehäuse erstrecken, und Aussparungen oder Löcher in dem anderen von dem äußeren Gehäuse und dem inneren Gehäuse aufweist, um die Stifte an der einen oder den mehreren vorbestimmten axialen Positionen verriegelnd aufzunehmen.

12. Behälter zum Aufnehmen und Lagern von Inhalt, wobei der Behälter einen oder mehrere Füllstandssensoren nach einem der vorhergehenden Ansprüche beinhaltet, die sich in den Behälter erstrecken, um einen Füllstand des Inhalts zu erfassen.

13. Behälter nach Anspruch 12, der ein Tank zur Sammlung von Abfall ist.

## Revendications

1. Capteur de niveau pour la détection d'un niveau de contenu dans un réservoir, le capteur de niveau (400a, 400b) comprenant un câble flexible (102) à une extrémité duquel est fixé un capteur à flotteur (104), le capteur à flotteur étant configuré pour être suspendu à partir du câble dans le réservoir, pendant son utilisation, et pour changer d'orientation lorsqu'il entre en contact avec le contenu du réservoir, et dans lequel le capteur à flotteur est activé pour générer une indication de détection de niveau en fonction de son orientation ; dans lequel le capteur à flotteur comporte une cavité interne (106) contenant un dispositif de détection (105) et remplie en partie d'un fluide conducteur (107), de sorte que, dans une première orientation du capteur à flotteur, dans laquelle il est suspendu, le fluide recouvre le dispositif de détection, et dans une seconde orientation du capteur à flotteur, dans laquelle il flotte, le fluide dans la cavité ne recouvre pas le dispositif de détection, **caractérisé en ce que** le dispositif de détection est un dispositif de détection capacitif (105).

2. Capteur de niveau selon la revendication 1, comprenant un conducteur (108) s'étendant le long du câble (102) jusqu'au capteur à flotteur (104) pour alimenter le capteur à flotteur en énergie électrique.

3. Capteur de niveau selon une quelconque revendication précédente, dans lequel le fluide conducteur est de l'eau.

4. Capteur de niveau selon une quelconque revendication précédente, dans lequel le capteur à flotteur (104) est formé d'une partie inférieure arrondie (141) pour stabiliser le capteur à flotteur lorsqu'il entre en contact avec le contenu du réservoir.

5. Capteur de niveau selon la revendication 4, la partie inférieure (141) ayant une surface de fond arrondie (152) et une surface de partie supérieure plate (151).

6. Capteur de niveau selon la revendication 5, ayant une partie supérieure (142) montée sur la surface de partie supérieure plate de la partie inférieure.

7. Capteur de niveau selon la revendication 6, dans lequel la partie inférieure (141) est en plastique et/ou dans lequel la partie supérieure (142) est en mousse de polyuréthane.

8. Capteur de niveau selon une quelconque revendication précédente, comprenant en outre un ensemble de réglage de hauteur (500) à travers lequel s'étend le câble (102), l'ensemble de réglage de hauteur comprenant un boîtier (502) auquel est fixé le câble et qui peut être déplacé par un utilisateur dans une direction axiale pour faire varier la hauteur du capteur à flotteur dans le contenant, pendant son utilisation.

9. Capteur de niveau selon la revendication 8, dans lequel le boîtier du réglage de hauteur est un boîtier interne (502) et comprenant en outre un boîtier externe (504) dans lequel le boîtier interne est monté pour un mouvement axial par rapport à celui-ci, le boîtier externe étant configuré pour être fixé au contenant, pendant son utilisation.

10. Capteur de niveau selon la revendication 9, comprenant en outre un mécanisme de verrouillage entre le boîtier interne et le boîtier externe pour verrouiller le mouvement du boîtier interne par rapport au boîtier externe dans une ou plusieurs positions axiales prédéterminées.

11. Capteur de niveau selon la revendication 10, dans lequel le mécanisme de verrouillage comprend des goupilles de verrouillage à ressort s'étendant de l'un parmi le boîtier interne ou le boîtier externe et des évidements ou des trous dans l'autre parmi le boîtier externe et le boîtier interne pour recevoir les goupilles dans l'objectif de les verrouiller dans une ou plusieurs positions axiales prédéterminées.

12. Contenant destiné à recevoir et à stocker du contenu, le contenant comportant un ou plusieurs capteurs de niveau selon une quelconque revendication précédente, s'étendant à l'intérieur du contenant pour détecter un niveau du contenu.

13. Contenant selon la revendication 12, qui est un réservoir pour la collecte des déchets.
